# EUROPÄISCHE PATENTSCHRIFT

(11) **EP 3 299 850 B1**
(45) Veröffentlichungstag und Bekanntmachung des Hinweises auf die Patenterteilung: **31.07.2024**
(21) Anmeldenummer: 17189883.6
(22) Anmeldetag: 07.09.2017
(51) Int. Cl.: G02B 6/125, G01B 11/16, G02B 1/00, G01L 1/24, G02F 1/00, G01K 11/00, G02B 6/122, G01K 5/48

(54) **OPTISCHE KOMPONENTE, SENSOR UND VERFAHREN ZUR MESSUNG EINER DEHNUNG UND/ODER EINER TEMPERATUR**
OPTICAL COMPONENT, SENSOR AND METHOD FOR MEASURING AN ELONGATION AND/OR A TEMPERATURE
COMPOSANT OPTIQUE, CAPTEUR ET PROCÉDÉ DE MESURE D'UN ALLONGEMENT ET/OU D'UNE TEMPÉRATURE

(30) Priorität: 21.09.2016 DE 102016218067
(43) Veröffentlichungstag der Anmeldung: 28.03.2018
(73) Patentinhaber: Fraunhofer-Gesellschaft zur Förderung der angewandten Forschung e.V., 80686 München (DE)
(72) Erfinder: Bethmann, Konrad, 30966 Hemmingen (DE); Schade, Wolfgang, 38644 Goslar (DE); Köhring, Michael, 37441 Bad Sachsa (DE)
(74) Vertreter: Friese Goeden Patentanwälte PartGmbB

(56) Entgegenhaltungen:
- WO-A1-2004/017111
- US-A1- 2005 117 866
- US-A1- 2009 323 014
- BING SHEN ET AL: "An integrated-nanophotonics polarization beamsplitter with 2.4?x?2.4 [mu]m2 footprint", NATURE PHOTONICS, vol. 9, no. 6, 18 May 2015 (2015-05-18), UK, pages 378 - 382, XP055439251, ISSN: 1749-4885, DOI: 10.1038/nphoton.2015.80
- YI YANG ET AL: "Photonic crystal stress sensor with high sensitivity in double directions based on shoulder-coupled aslant nanocavity", SENSORS AND ACTUATORS A: PHYSICAL, vol. 193, 1 April 2013 (2013-04-01), NL, pages 149 - 154, XP055466137, ISSN: 0924-4247, DOI: 10.1016/j.sna.2013.01.045

## Beschreibung

Die Erfindung betrifft eine optische Komponente mit einem Substrat mit einem ersten Brechungsindex, in welchem Raumbereiche mit einem zweiten Brechungsindex ausgebildet sind, wobei die optische Komponente zumindest ein optisches Metamaterial enthält, welches eine Mehrzahl einzelner Pixel enthält, welche jeweils einen Raumbereich umfassen, welcher den ersten oder den zweiten Brechungsindex aufweist. Weiterhin betrifft die Erfindung einen optischen Sensor, welcher zumindest eine der vorstehend beschriebenen optischen Komponenten enthält. Schließlich betrifft die Erfindung ein Verfahren zur Messung einer Dehnung und/oder eine Temperatur mit zumindest einer optischen Komponente, welche ein Substrat enthält, auf welchem Raumbereiche mit einem zweiten Brechungsindex ausgebildet sind. Vorrichtungen und Verfahren der eingangs genannten Art können beispielsweise als Koppler in der optischen Nachrichtentechnik oder als optischer Dehnungsmessstreifen zur Erfassung einer Temperatur und/oder einer Last eingesetzt werden.

Aus B. Shen, P. Wang, R. Polson, R. Menon, Nature Photon. 9, 378 - 382 (2015) ist ein optisches Metamaterial der eingangs genannten Art bekannt. Dieses Metamaterial wird mit üblichen, aus der Halbleiterherstellung bekannten Lithografiemethoden in einem Siliziumsubstrat erzeugt. Dieses bekannte Material weist jedoch den Nachteil auf, dass Silizium energetisch aufwändig in der Herstellung ist. Weiterhin sind die Einsatzmöglichkeiten von Siliziumbauelementen begrenzt, da diese spröde sind und leicht brechen.

Aus der WO 2004/017111 A1 sind lichtempfindliche Polymermaterialien bekannt. Diese umfassen einen oder mehrere längliche Hohlräume, welche photonische Kristalle bilden.

Die US 2009/0323014 A1 offenbart photonische Kristalle. Diese dienen der Verhinderung der Übertragung elektromagnetischer Strahlung von einer oder mehreren Laserquellen, um so eine optische Abschirmung zum Schutz der Augen eines Benutzers oder eines optischen Sensors bereitzustellen.

Die US 2005/0117866 A1 zeigt ein Gerät, das auf einem flexiblen photonischen Kristall basiert, der aus einer periodischen Anordnung dielektrischen Materials mit hohem Brechungsindex besteht, das in ein flexibles Polymer eingebettet ist.

Aus Y. Yang, D. Yang, H. Tian, Y. Ji: Photoniccrystal stress sensor with high sensitivity in double directions based on shoulder-coupled aslant nanocavity. Sensors and Actuators A 193 (2013) 149 ist ein Sensor für mechanische Spannung bekannt.

Ausgehend vom Stand der Technik liegt der Erfindung somit die Aufgabe zugrunde, eine optische Komponente anzugeben, welche neue Einsatzmöglichkeiten erschließt und/oder einen zuverlässigeren Betrieb ermöglicht und/oder welche einfacher und kostengünstiger herstellbar ist.

Die Aufgabe wird erfindungsgemäß durch eine Vorrichtung gemäß Anspruch 1, einen optischen Sensor nach Anspruch 6 und ein Verfahren nach Anspruch 10 gelöst. Vorteilhafte Weiterbildungen der Erfindung finden sich in den Unteransprüchen.

Erfindungsgemäß wird eine integrierte optische Komponente auf einem Substrat vorgeschlagen. Das Substrat weist einen ersten Brechungsindex auf, welcher eine Materialkonstante des für das Substrat verwendeten Materials darstellt.

Durch Punkt-zu-Punkt-Belichten mit einem Kurzpulslaser, durch Belichten mit einer Maske, durch Dotierung oder durch andere, an sich bekannte Verfahren wird das Material des Substrates teilweise verändert, sodass sich Raumbereiche ausbilden, welche einen zweiten Brechungsindex aufweisen. Hierdurch können auf bzw. in dem Substrat Funktionsbereiche erzeugt werden, wie beispielsweise Wellenleiter, Koppler, Interferometer oder andere, an sich bekannte optische Bauelemente.

Die erfindungsgemäße optische Komponente enthält zumindest einen Bereich, in welchem ein optisches Metamaterial ausgebildet wird. Unter einem Metamaterial werden für die Zwecke der vorliegenden Beschreibung Materialien verstanden, welche eine künstlich hergestellte Struktur enthalten, deren elektrische Permitivität und deren magnetische Permeabilität von den in der Natur üblichen Werten abweichen. Dies wird erreicht durch periodische, kleine Strukturen, welche im Inneren des Metamaterials ausgebildet werden. Vorliegend enthält das Metamaterial eine Mehrzahl einzelner Pixel, welche jeweils einen Raumbereich umfassen, welcher den ersten oder den zweiten Brechungsindex aufweist. Die Pixel können periodisch angeordnet sein, sodass sich quasi ein Schachbrettmuster ergibt, in welchem Pixel des einen und des anderen Brechungsindex abwechselnd angeordnet sind, wobei in den darunterliegenden Zeilen die Pixelfolge um eine Periode versetzt ist. In anderen Ausführungsformen der Erfindung können die Pixel ähnlich wie in einem optischen QR-Code in einem vorgebbaren, auf den ersten Blick willkürlichen Muster angeordnet sein, sodass sich eine gewünschte, vorgebbare Wirkung des Metamaterials auf optische Signale ergibt.

Erfindungsgemäß wird nun vorgeschlagen, dass das Substrat zumindest ein Polymer enthält oder aus einem Polymer besteht. Dies ermöglicht einerseits eine einfachere und kostengünstigere Fertigung der optischen Komponente, beispielsweise durch Punkt-zu-Punkt-Belichten mit einem Kurzpulslaser. Der Kurzpulslaser kann in einigen Ausführungsformen der der Erfindung Pulse von weniger als 1 ns, weniger als 100 fs oder weniger als 10 fs aussenden. In anderen Ausführungsformen der Erfindung können mittels Laserstrahlung thermische Effekte in dem Material des Substrates erzeugt werden, welche zu einer Änderung des Brechungsindex führen. In wiederum anderen Ausführungsformen der Erfindung kann das Polymer des Substrates durch Maskieren und Ätzen teilweise entfernt und durch ein zweites Polymer ersetzt werden. Hierdurch können zum einen an sich bekannte optische Komponenten wie Wellenleiter, Koppler oder Interferometer im Substrat ausgebildet werden. In zumindest einer Teilfläche bzw. einem Teilvolumen des Substrates kann zusätzlich das erfindungsgemäße Metamaterial erzeugt werden, indem einzelne Pixel in der oben beschriebenen, gewünschten Abfolge erzeugt werden.

Die erfindungsgemäße optische Komponente weist zudem den Vorteil auf, dass das Substrat eine im Vergleich zu Silizium größere thermische Ausdehnung aufweist. Hierdurch können sich bestimmte, vorgebbare Eigenschaften des Metamaterials ändern, sodass die optische Komponente zur Messung einer Temperatur herangezogen werden kann. In wiederum anderen Ausführungsformen der Erfindung kann das Substrat auf einer mechanischen Komponente bzw. einem mechanischen Bauteil befestigt sein, sodass bei einer Längenänderung des Bauteils auch eine Längenänderung des Substrates in zumindest einer Richtung erfolgt. Auch hierdurch können sich vorgebbare Eigenschaften des Metamaterials ändern, sodass die erfindungsgemäße optische Komponente als Sensor zur Messung einer Verformung und damit indirekt auch zur Messung einer einwirkenden Belastung bzw. Kraft verwendbar ist. Schließlich können mehrere Metamaterialien auf einem Substrat integriert sein, sodass unterschiedliche Belastungen bzw. unterschiedliche Belastungsrichtungen erfasst werden können oder Temperatur und einwirkende Last unabhängig voneinander bestimmbar sind.

In einigen Ausführungsformen der Erfindung kann die Länge und/oder die Breite und/oder die Höhe eines Pixels kleiner sein als die Wellenlänge der optischen Signale, für deren Betrieb die optische Komponente eingerichtet ist. Hierdurch ist sichergestellt, dass die optischen Eigenschaften des Metamaterials in weiten Grenzen eingestellt werden können. Hierdurch kann das optische Signal nicht nur wie in konventionellen optischen Bauelementen fokussiert oder reflektiert werden, sondern auch gedehnt, verzerrt oder auf weitere Arten manipuliert werden.

In einigen Ausführungsformen der Erfindung kann die Breite und/oder die Länge eines Pixels zwischen etwa 50 nm und etwa 800 nm oder zwischen etwa 200 nm und etwa 400 nm betragen. In einigen Ausführungsformen der Erfindung kann die Höhe eines Pixels zwischen etwa 0,5 µm und etwa 5 µm betragen. Dies erlaubt den Betrieb der optischen Komponente mit sichtbarem Licht oder mit Infrarotstrahlung. Insbesondere ist damit ein Betrieb der optischen Komponente mit den in der Telekommunikation gängigen Wellenlängen möglich, sodass erprobte und kostengünstige Lichtquellen und Detektoren zur Verfügung stehen.

In einigen Ausführungsformen der Erfindung können die Pixel des Metamaterials in einem Array angeordnet sein. Dies erlaubt eine einfache Fertigung und eine diskrete Berechnung des Metamaterials, sodass eintreffende elektromagnetische Strahlung bzw. optische Signale in genau definierter Art und Weise manipuliert werden können.

In einigen Ausführungsformen der Erfindung kann das Array in jeder Raumrichtung zwischen etwa 10 und etwa 1000 oder zwischen etwa 10 und etwa 200 oder zwischen etwa 100 und etwa 1000 oder zwischen etwa 150 und etwa 800 oder zwischen etwa 50 und etwa 500 Pixeln aufweisen. Metamaterialien in dieser Größe sind einerseits einfach herstellbar, gut in optischen Komponenten integrierbar und dazu geeignet, einen hinreichenden Effekt auf eintreffende elektromagnetische Strahlung auszuüben.

Erfindungsgemäß beträgt der erste Brechungsindex zwischen etwa 1,0 und etwa 1,6 und der zweite Brechungsindex zwischen etwa 1,4 und etwa 1,9, wobei der zweite Brechungsindex größer ist als der erste Brechungsindex. Der Unterschied der Brechungsindices ist damit einerseits groß genug, um eine effiziente Führung optischer Signale in Wellenleiterstrukturen zu ermöglichen und andererseits Metamaterialien auszubilden, welche die gewünschte Manipulation der optischen Signale mit vergleichsweise einfachen Strukturen ermöglichen.

In einigen Ausführungsformen der Erfindung kann das Substrat Polymethylmetacrylat und/oder ein Fotoresist enthalten. Solche Substrate können einfach bearbeitet werden und im Falle eines Fotoresists durch Beschichtung einer mechanischen Komponente bzw. eines Maschinenbauteils unmittelbar auf dem Bauteil erzeugt werden, dessen Eigenschaften bestimmt werden sollen.

In einigen Ausführungsformen der Erfindung kann ein Teil der Pixel einen Dotierstoff und/oder Nanopartikel enthalten. Hierdurch kann sich der Brechungsindex des Substratmaterials ändern, sodass durch dotierte und undotierte Raumbereiche die Pixel mit erstem und zweitem Brechungsindex des Metamaterials erzeugt werden können.

In einigen Ausführungsformen der Erfindung kann ein Teil der Pixel Titandioxid enthalten. Titandioxid als Nanopartikel ist einfach zu verarbeiten, ungiftig und führt zu einer hinreichend großen Änderung des Brechungsindex, sodass sich damit die erfindungsgemäßen optischen Komponenten besonders einfach herstellen lassen.

In einigen Ausführungsformen der Erfindung wird ein erfindungsgemäßer Sensor dadurch ausgelesen, dass zumindest eine Beleuchtungseinrichtung mittels eines Eingangswellenleiters an das Sensorelement gekoppelt ist. Hierdurch kann ein optisches Abfragesignal von einer Lichtquelle, beispielsweise einem Laser, einer Leuchtdiode oder einer Superlumineszenzdiode in das als Sensorelement verwendete Metamaterial eingekoppelt werden.

In einigen Ausführungsformen der Erfindung kann zumindest eine Nachweiseinrichtung mittels eines Ausgangswellenleiters an das Sensorelement gekoppelt sein. Als Nachweiseinrichtung kann beispielsweise ein Spektrometer oder eine Fotodiode verwendet werden.

In einigen Ausführungsformen der Erfindung kann ein erfindungsgemäßer Sensor zumindest zwei Ausgangswellenleiter aufweisen, welche jeweils mit einer Fotodiode verbunden sind. Als Messsignal kann dann das Maß der Überkopplung eines über einen Eingangswellenleiter zugeführten optischen Signales in beide Ausgangswellenleiter herangezogen werden. Dieses lässt sich einfach durch Bestimmung des Intensitätsverhältnisses der zwei Fotodioden bestimmen.

In einigen Ausführungsformen der Erfindung kann ein Ausgangswellenleiter ein Singlemode-Wellenleiter sein und ein Ausgangswellenleiter kann ein Multimode-Wellenleiter sein. Das als Sensorelement verwendete Metamaterial ist in diesen Fällen so gestaltet, dass ohne Einwirken einer Last ein vorgebbarer Anteil eines optischen Eingangssignals in den Singlemode-Wellenleiter überkoppelt. Bei Streckung bzw. Stauchung des Metamaterials durch einwirkende Kräfte und/oder Temperaturänderung verändert sich der Anteil des im Singlemode-Wellenleiter nachgewiesenen Lichtes, sodass das Intensitätsverhältnis zur Bestimmung von Kraft- und/oder Temperatur herangezogen werden kann.

In einigen Ausführungsformen der Erfindung ist das Metamaterial dazu eingerichtet, zwischen etwa 1 % und etwa 20 % des über einen Eingangswellenleiter eingekoppelten Lichtes in einen Ausgangswellenleiter überzukoppeln, wobei zwischen etwa 90 % und etwa 10 % in den zweiten Ausgangswellenleiter einkoppeln. Dies erlaubt eine einfache Messung mit gutem Signal-/Rauschverhältnis und geringem apparativen Aufwand. In einigen Ausführungsformen der Erfindung kann das Verhältnis der Intensitäten der optischen Signale im ersten und zweiten Ausgangswellenleiter zwischen etwa 1:12 und etwa 1:4 betragen.

In einigen Ausführungsformen der Erfindung kann die zur Auslese des verwendete Beleuchtungseinrichtung Licht mit einer Wellenlänge zwischen 500 nm, etwa 1000 nm aussenden. In anderen Ausführungsformen der Erfindung kann die Beleuchtungseinrichtung Licht mit einer Wellenlänge zwischen etwa 800 nm und etwa 950 nm aussenden. In einigen Ausführungsformend er Erfindung können Silicium-Photodioden als Nachweiseinrichtung verwendet werden.

In einigen Ausführungsformen der Erfindung kann das Licht dem als Sensorelement verwendeten Metamaterial mittels eines Eingangswellenleiters zugeführt werden, welcher in der durch das Metamaterial definierten Ebene liegt.

In anderen Ausführungsformen der Erfindung kann das Licht der Beleuchtungseinrichtung dem Sensorelement entlang des Normalenvektors der durch das Metamaterial definierten Ebene zugeführt werden. Dies erlaubt eine einfache Montage der Lichtquellen, welche in einem der Anordnung mehrerer Metamaterialien entsprechenden Raster auf einem zweiten Substrat angeordnet werden können, welches beispielsweise durch Flip-Chip-Bonden oder Klebung auf dem Substrat der Komponente angeordnet wird. In einigen Ausführungsformen kann die Lichtquelle beabstandet zum Metamaterial bzw. zum Polymersubstrat des Sensors angeordnet sein und beispielsweise einen Laser enthalten oder eine optische Linse aufweisen, um auf diese Weise das Messignal kontaktlos und ohne die Verwendung elektronischer Bauteile auf dem Messobjekt anzuregen.

In einigen Ausführungsformen der Erfindung kann zumindest ein Ausgangswellenleiter einen ersten Fluoreszenzfarbstoff enthalten. Dieses Merkmal hat die Wirkung, dass das Messignal berührungslos anhand der Intensität des Floureszenssignals erfasst werden kann.

In einigen Ausführungsformen der Erfindung kann auf dem Substrat des Sensors oder benachbart zum Sensor im Erfassungsbereich der Nachweiseinrichtung zumindest eine Teilfläche angeordnet ist, welche einen zweiten Fluoreszenzfarbstoff enthält. In einigen Ausführungsformen der Erfindung kann der zweite Fluoreszenzfarbstoff eine andere Fluoreszenzwellenlänge als der erste Fluoreszenzfarbstoff aufweisen. Durch die Messung der Intensität des Floureszenssignals des zweiten Fluoreszenzfarbstoffs kann dass Messsignal des Ausgangswellenleiters auf die eintreffende Intensität der Beleuchtungseinrichtung normiert werden.

Nachfolgend soll die Erfindung anhand von Figuren ohne Beschränkung des allgemeinen Erfindungsgedankens näher erläutert werden. Dabei zeigt:
- Figur 1: eine schematische Darstellung einer erfindungsgemäßen optischen Komponente in einer ersten Ausführungsform.
- Figur 2: zeigt eine schematische Darstellung einer erfindungsgemäßen optischen Komponente in einer zweiten Ausführungsform.
- Figur 3: zeigt Simulationsergebnisse des Verhaltens der optischen Komponente gemäß der zweiten Ausführungsform.
- Figur 4: zeigt die Abhängigkeit des Intensitätsverhältnisses in den Ausgangswellenleitern bei horizontaler Dehnung der optischen Komponente gemäß Figur 2.
- Figur 5: zeigt die Wellenlängenabhängigkeit des Intensitätsverhältnisses in den Ausgangswellenleitern bei horizontaler Dehnung.
- Figur 6: zeigt einen Dehnungssensor gemäß einer ersten Ausführungsform der Erfindung.
- Figur 7: zeigt einen Dehnungssensor gemäß einer zweiten Ausführungsform der Erfindung.
- Figur 8: zeigt einen Dehnungssensor gemäß einer dritten Ausführungsform der Erfindung.

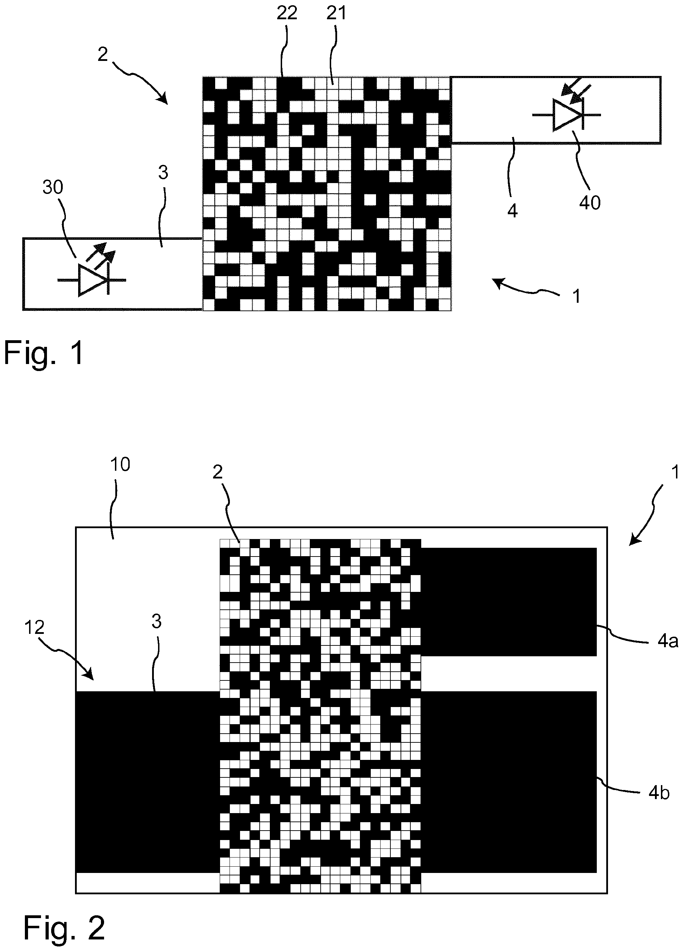

Figur 1 zeigt in einer ersten Ausführungsform eine optische Komponente 1 gemäß der vorliegenden Erfindung. Die optische Komponente 1 kann beispielsweise auf einem Substrat 10 angeordnet sein. Das Substrat 10 enthält erfindungsgemäß ein Polymer. Beispielsweise kann eine Folie bzw. eine Platte aus einem Polymer als Substrat verwendet werden. Das Polymer kann beispielsweise Polymethylmetacrylat, Polyester, Polycarbonat oder Polyethylen enthalten oder daraus bestehen. Das Substrat kann einen einschichtigen, homogenen Aufbau aufweisen oder aber mehrere, aufeinander bzw. übereinander angeordnete Lagen gleicher oder unterschiedlicher Materialien enthalten. In einigen Ausführungsformen der Erfindung kann das Substrat eine Polymer-Beschichtung auf einem Bauteil sein bzw. eine solche Beschichtung enthalten. Das Bauteil selbst kann in diesen Fällen aus einem Metall, einer Legierung, einem Glas oder einer Keramik bestehen oder eine solche enthalten.

Das Substrat weist einen ersten Brechungsindex auf. Durch Dotieren, Materialmodifikation durch Laser- und/oder UV-Strahlung oder teilweises Entfernen des Materials des Substrates und Auffüllen mit einem anderen Material können im Substrat 10 Raumbereiche bzw. Flächenbereiche 12 ausgebildet werden, welche einen zweiten Brechungsindex aufweisen. In einigen Ausführungsformen der Erfindung kann der erste Brechungsindex zwischen 1,1 und etwa 1,6 betragen. Der zweite Brechungsindex kann zwischen etwa 1,7 und etwa 1,9 betragen. Selbstverständlich sind auch andere Ausführungsformen der Erfindung denkbar, in welchen die Brechungsindices von den genannten Werten abweichen. Vorteilhaft ist in einigen Ausführungsformen jedoch ein großer Brechungsindexkontrast, d.h. ein entsprechend großer Unterschied zwischen dem ersten und dem zweiten Brechungsindex.

Durch die Änderung des Brechungsindex werden im Substrat 10 Strukturen gebildet, welche die optische Komponente bilden. In dem in Figur 1 dargestellten Ausführungsbeispiel ist ein digitales Metamaterial 2 dargestellt. Das Metamaterial 2 enthält ein Array einzelner Pixel. Aus Gründen der Übersichtlichkeit sind in Figur 1 lediglich 20x20 Pixel dargestellt. In anderen Ausführungsformen der Erfindung kann die Anzahl der Pixel in horizontaler und/oder vertikaler Richtung auch größer bzw. kleiner sein. Auch müssen einzelne Pixel nicht wie in Figur 1 dargestellt quadratisch sein. Denkbar sind auch andere polygonale oder runde Formen. Die Tiefe einzelner Pixel innerhalb des Substrates können sich über die gesamte Materialstärke des Substrates erstrecken.

In anderen Ausführungsformen können die Pixel eine geringere Tiefe aufweisen. Die in Figur 1 dargestellte Länge bzw. Breite in horizontaler und vertikaler Richtung kann in einigen Ausführungsformen zwischen etwa 50 nm und etwa 800 nm betragen. Im Allgemeinen werden die Abmessungen eines Pixels kleiner sein als die Wellenlänge optischer Signale, welche von der optischen Komponente 1 verarbeitet werden.

Wie in Figur 1 dargestellt ist, enthält das Metamaterial 2 erste Pixel 21, welche einen ersten Brechungsindex aufweisen sowie zweite Pixel 22, welche einen zweiten Brechungsindex aufweisen. Erste und zweite Pixel können innerhalb des das Metamaterial 2 bildenden Arrays in einem regelmäßigen oder unregelmäßigen Muster angeordnet sein. Die genaue Abfolge erster und zweiter Pixel kann beispielsweise in einer Simulation berechnet werden, um ein gewünschtes Verhalten der optischen Komponente 1 zu erzielen. Beispielsweise kann die optische Komponente 1 als Koppler verwendet werden, welcher optische Signale von einem oder mehreren Eingangswellenleitern auf einen oder mehrere Ausgangswellenleiter überkoppelt. Größe, Brechungsindices und Anordnung der Pixel 21 und 22 innerhalb des Metamaterials 2 bestimmt dabei das Verhalten eines so gebildeten Kopplers.

In anderen Ausführungsformen der Erfindung kann das Metamaterial 2 als Sensor für Temperatur- und/oder mechanische Spannung bzw. Dehnung verwendet werden. In diesem Fall ändert sich der Einfluss des Metamaterials 2 auf ein optisches Eingangssignal in Abhängigkeit der thermischen Ausdehnung bzw. in Abhängigkeit der mechanischen Verformung aufgrund einer Verformung eines mit der optischen Komponente verbundenen Bauteils.

Lediglich beispielhaft zeigt Figur 1 einen einzigen Eingangswellenleiter 3 sowie einen einzigen Ausgangswellenleiter 4. Optische Signale, beispielsweise infrarotes Licht, werden mittels einer Beleuchtungseinrichtung 30 erzeugt. Die Beleuchtungseinrichtung 30 kann beispielsweise eine Leuchtdiode, eine Superlumineszenzdiode oder einen Halbleiterlaser umfassen. Die Beleuchtungseinrichtung 30 kann ein moduliertes optisches Signal erzeugen, wobei die Modulation Daten repräsentieren kann.

Das über den Eingangswellenleiter 3 in das Metamaterial 2 eingekoppelte optische Signal wechselwirkt mit den ersten Pixeln 21 und den zweiten Pixeln 22 bzw. an den zwischen den ersten und zweiten Pixeln 21 und 22 ausgebildeten Grenzflächen. Hierdurch kann es zu Interferenzen, Intensitätsänderungen und/oder Phasenverschiebungen kommen.

Das solchermaßen modifizierte elektromagnetische Signal wird einem Ausgangswellenleiter 4 zugeführt. Der Ausgangswellenleiter 4 ist mit einer schematisch dargestellten Nachweiseinrichtung 40 verbunden. Die Nachweiseinrichtung 40 kann in einigen Ausführungsformen zumindest eine Fotodiode enthalten. In anderen Ausführungsformen der Erfindung kann die Nachweiseinrichtung 40 zumindest zwei Fotodioden enthalten, wie nachfolgend anhand den Figuren 2, 6 und 7 erläutert wird.

Zur Herstellung des Metamaterials 2 kann in einigen Ausführungsformen der Erfindung ein Fotoresist bzw. ein UVhärtender Lack verwendet werden. Die Lackschicht bildet in diesen Fällen das Substrat bzw. einen Teil des Substrates mit dem ersten Brechungsindex. Dieser kann beispielsweise 1,51 betragen.

Der UV-härtende Lack wird mit einer strukturierten Maske partiell ausgehärtet. Hierzu kann beispielsweise die Mikroskop-Projektions-Fotolithografie verwendet werden. Alternativ kann auch eine 2-Photonen-Fotolithografie, ein Prägeverfahren oder ein Direkt-Einschreib-Verfahren mittels Kurzpuls-Laserstrahlung verwendet werden.

Nachfolgend wird der UV-härtende Lack teilweise entfernt. Die auf diese Weise entstehenden Fehlstellen können mit einem zweiten Polymer mit einem zweiten Brechungsindex aufgefüllt werden. In einigen Ausführungsformen der Erfindung kann das zweite Polymer einen Dotierstoff enthalten, beispielsweise Nanopartikel, welche beispielsweise TiO₂ enthalten oder daraus bestehen. Das zweite Polymer kann beispielsweise Polymethylmetacrylat sein. Auf diese Weise kann der zweite Brechungsindex 1,81 betragen, sodass ein hinreichend großer Kontrast zum Ausgangsmaterial besteht.

Figur 2 zeigt eine zweite Ausführungsform einer erfindungsgemäßen optischen Komponente. Gleiche Bestandteile der Erfindung sind mit gleichen Bezugszeichen versehen, sodass sich die nachfolgende Beschreibung auf die wesentlichen Unterschiede beschränkt.

Auch Figur 2 zeigt ein Substrat 10, auf welchem ein Metamaterial 2 ausgebildet ist. Dem Metamaterial 2 wird über einen Eingangswellenleiter 3 Licht zugeführt. Auf der gegenüberliegenden Seite des Metamaterials 2 befinden sich zwei Ausgangswellenleiter 4a und 4b. Der Ausgangswellenleiter 4a weist eine geringere Breite auf, sodass dieser einen Singlemode-Wellenleiter bildet. Der Wellenleiter 4b mit größerer Breite ist hingegen wie der Eingangswellenleiter 3 ein Multimode-Wellenleiter.

Die Abfolge erster und zweiter Pixel 21 und 22 des Metamaterials 2 ist so gerechnet, dass eine vorgebbare Lichtintensität vom Eingangswellenleiter 3 in den ersten Ausgangswellenleiter 4a überkoppelt. Die verbleibende Lichtintensität abzüglich eventueller Verluste koppelt in den zweiten Ausgangswellenleiter 4b.

Sowohl der erste Ausgangswellenleiter 4a als auch der zweite Ausgangswellenleiter 4b sind mit Nachweiseinrichtungen, beispielsweise Fotodioden, verbunden. Somit kann die in Figur 2 dargestellte optische Komponente 1 als optischer Koppler oder Modenkonverter verwendet werden, welcher ein Eingangssignal in zwei Ausgangssignale aufteilt. In anderen Ausführungsformen der Erfindung kann die optische Komponente 1 als Dehnungssensor verwendet werden. Dies beruht auf der Erkenntnis, dass bei horizontaler Dehnung bzw. Stauchung des Metamaterials 2 dessen optische Eigenschaften dahingehend geändert werden, dass ein größerer oder geringerer Anteil des Lichtes in den ersten Ausgangswellenleiter 4a überkoppelt. Somit kann durch Bestimmung des Intensitätsverhältnisses in den Ausgangswellenleitern 4a und 4b auf die auf das Metamaterial 2 einwirkende Dehnung geschlossen werden. Bei Kenntnis weiterer Parameter des mit dem Metamaterial 2 bzw. der optischen Komponente 1 versehenen Bauteils kann die auf das Bauteil einwirkende mechanische Spannung bzw. die einwirkende Kraft bestimmt werden. Im Gegensatz zu bekannten piezoelektrischen Dehnungssensoren weist die erfindungsgemäß vorgeschlagene optische Messung eine größere Resistenz gegen elektromagnetische Störungen auf und kann auch in explosionsgefährdeten Bereichen eingesetzt werden.

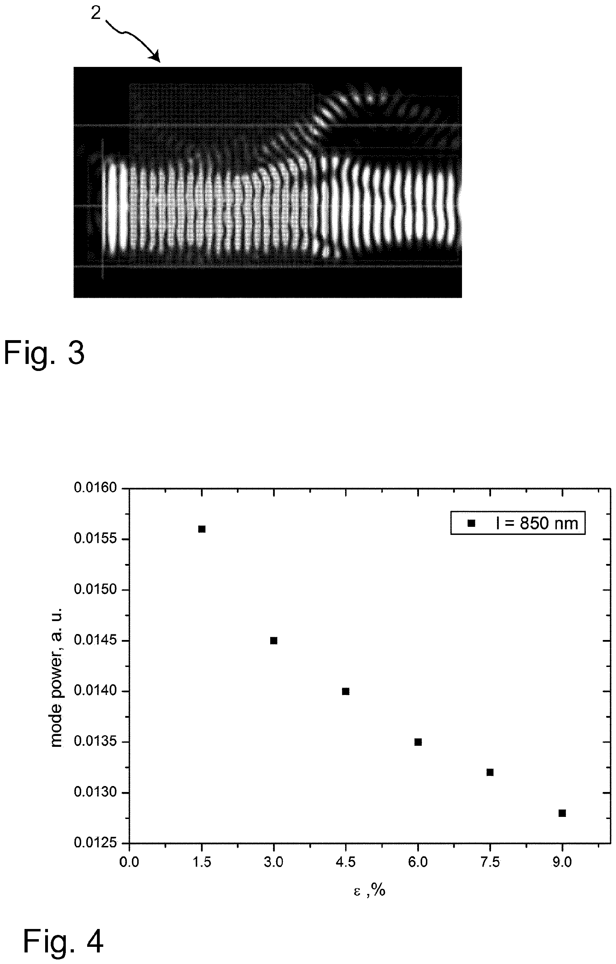

Figur 3 zeigt ein simuliertes Wellenfeld, welches sich in einer optischen Komponente gemäß der in Figur 2 dargestellten zweiten Ausführungsform ausbilden kann.

In Figur 3 ist die Intensität des Wellenfeldes in Form unterschiedlicher Helligkeitswerte dargestellt. Aus Figur 3 ist ersichtlich, dass ein Eingangssignal durch den Eingangswellenleiter 3 in das Metamaterial 2 eindringt. Das Metamaterial führt dazu, dass ein geringerer Anteil zwischen etwa 5 % und etwa 15 % der Intensität in den ersten Ausgangswellenleiter 4a einkoppelt. Die verbleibende Intensität wird abzüglich eventueller Verluste dem zweiten Ausgangswellenleiter 4b zugeführt.

Figur 4 zeigt die Intensität bzw. den Anteil eingekoppelten Lichtes am Ende des ersten Ausgangswellenleiters 4a in Abhängigkeit der Dehnung. Dabei ist die Intensität der in den ersten Ausgangswellenleiter 4a eingekoppelten Mode auf der Ordinate dargestellt. Die prozentuale Dehnung findet sich auf der Abszisse. Die Simulation erfolgte mit infrarotem Licht bei einer Wellenlänge von 850 nm.

Wie aus Figur 4 ersichtlich ist, sinkt die in den ersten Ausgangswellenleiter übertretende Intensität mit zunehmender Dehnung ab. Dabei ergibt sich ein Messbereich geringer prozentualer Dehnung, in welchem der Abfall überproportional erfolgt. Somit können insbesondere geringe Dehnungen mit hoher Genauigkeit erfasst werden. Daran schließt sich ab etwa 3 % ein näherungsweise linearer Bereich an. In diesem Messbereich kann daher eine besonders einfache Auswertung der Messsignale nach vorheriger Kalibrierung erfolgen.

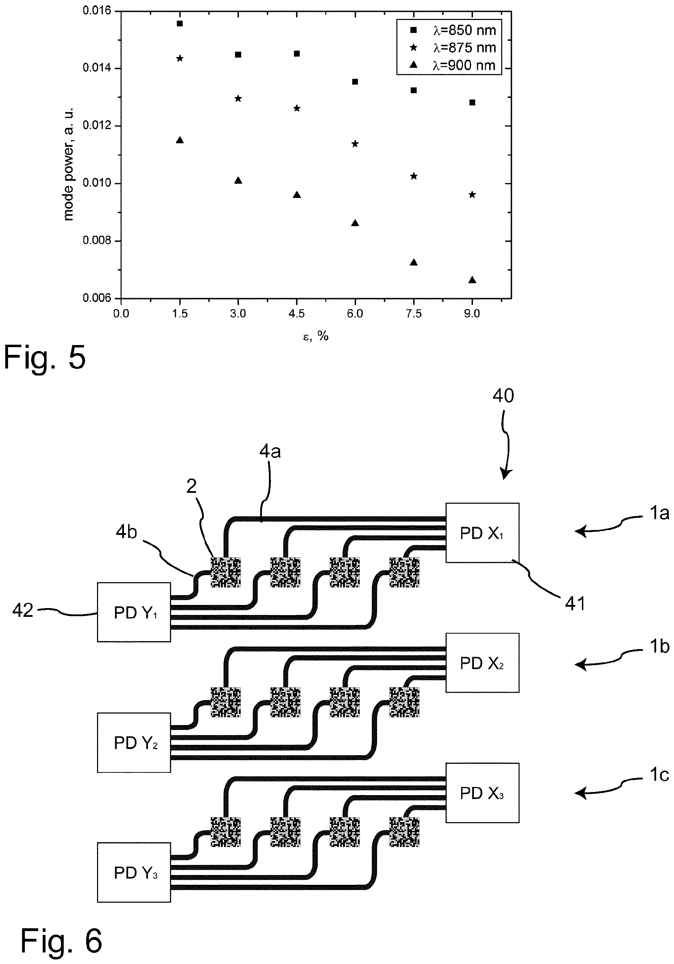

Auch Figur 5 zeigt die Intensität bzw. die optische Leistung der im ersten Ausgangswellenleiter 4a geführten Lichtmode auf der Ordinate gegen die Dehnung auf die Abszisse. Dargestellt sind Simulationsergebnisse für drei verschiedene Wellenlängen, nämlich 850 nm, 875 nm und 900 nm.

Aus Figur 5 ist ersichtlich, dass bei unterschiedlichen Wellenlängen die absolute Intensität im ersten Ausgangswellenleiter 4a variiert. Gleichwohl nimmt bei allen untersuchten Wellenlängen die Intensität mit zunehmender Dehnung ab, sodass Licht unterschiedlicher Wellenlängen verwendbar ist, um die gewünschten Messungen durchzuführen.

Figur 6 zeigt ein erstes Ausführungsbeispiel eines erfindungsgemäßen Sensors zur Messung mechanischer Spannungen und/oder Temperaturen. Der Sensor enthält drei optische Komponenten 1a, 1b und 1c, welche auf einem gemeinsamen, nicht näher dargestellten Substrat 10 angeordnet sein können. Obgleich beispielhaft lediglich drei optische Komponenten 1 dargestellt sind, lehrt die Erfindung nicht die Verwendung von genau drei optischen Komponenten als Lösungsprinzip. Vielmehr kann die Anzahl der optischen Komponenten in anderen Ausführungsformen der Erfindung größer oder geringer sein und beispielsweise zwischen 1 und etwa 20 betragen.

Gleiche Bezugszeichen bezeichnen gleiche Bestandteile der Erfindung, sodass sich die nachfolgende Beschreibung auf die wesentlichen Unterschiede beschränkt.

Jede einzelne optische Komponente 1a, 1b und 1c enthält im dargestellten Ausführungsbeispiel vier Metamaterialien 2, welche jeweils durch zugeordnete Ausgangswellenleiter 4a und 4b kontaktiert werden. Die Ausgangswellenleiter 4a und 4b verbinden die Metamaterialien 2 jeweils mit einem Fotodiodenarray 41 und 42, welche zusammen die Nachweiseinrichtung 40 bilden. Anders als bei der ersten und zweiten Ausführungsform gemäß Figur 1 und 2 sind die Ausgangswellenleiter 4a und 4b an unterschiedlichen Seitenkanten des Metamaterials 2 angeordnet. Auch in diesem Fall ist die Verwendung von exakt vier Metamaterialien 2 lediglich beispielhaft zu verstehen. Auch in diesem Fall lehrt die Erfindung nicht die Verwendung von exakt vier Metamaterialien 2 als Lösungsprinzip. Vielmehr kann die Zahl größer oder geringer sein und zwischen 1 und etwa 20 betragen.

Das Substrat mit den drei optischen Komponenten 1a, 1b und 1c und den insgesamt 12 Metamaterialien 2 kann auf einer mechanischen Komponente angeordnet sein, beispielsweise einem Flächentragwerk, einem Maschinenbauteil, einer Tragfläche eines Flugzeugs, einem Karosserieteil oder anderen, hier nicht genannten Bauteilen. Sofern diese Bauteile durch Einwirkung mechanischer Lasten oder Temperaturänderungen einer Formänderung unterliegen, werden auch die Metamaterialien verformt. Dies ist ein wesentlicher Vorteil der erfindungsgemäßen Ausführung der Metamaterialien 2 auf einem Polymersubstrat. Bisher bekannte Metamaterialien, welche auf Silizium realisiert wurden, können demgegenüber keine Formänderungen erfassen. Vielmehr würde eine Formänderung des zugrundeliegenden Bauteils zum Bruch des Substrates führen.

Wie bereits vorstehend beschrieben, führt die Änderung der Längsausdehnung in einer oder beiden Richtungen des Metamaterials 2 zu einer Änderung der in den Fotodiodenarrays 41 und 42 jeweils gemessenen Intensitäten. Durch die unterschiedlichen Kanäle des Fotodiodenarrays 41 bzw. 42 kann der jeweilige Messwert exakt einem Metamaterial 2 und damit einem Messort zugeordnet werden. Somit lassen sich Verformungen punktgenau über großflächige Bauteile bestimmen.

Das zur Intensitätsbestimmung bzw. zur Bestimmung des Intensitätsverhältnisses verwendete optische Abfragesignal wird im Ausführungsbeispiel gemäß Figur 6 entlang des normalen Vektors der durch das Metamaterial 2 des Steuerelementes 50 definierten Ebene zugeführt. Die Beleuchtungseinrichtungen, beispielsweise Leuchtdioden, sitzen somit gewissermaßen oberhalb des Substrates.

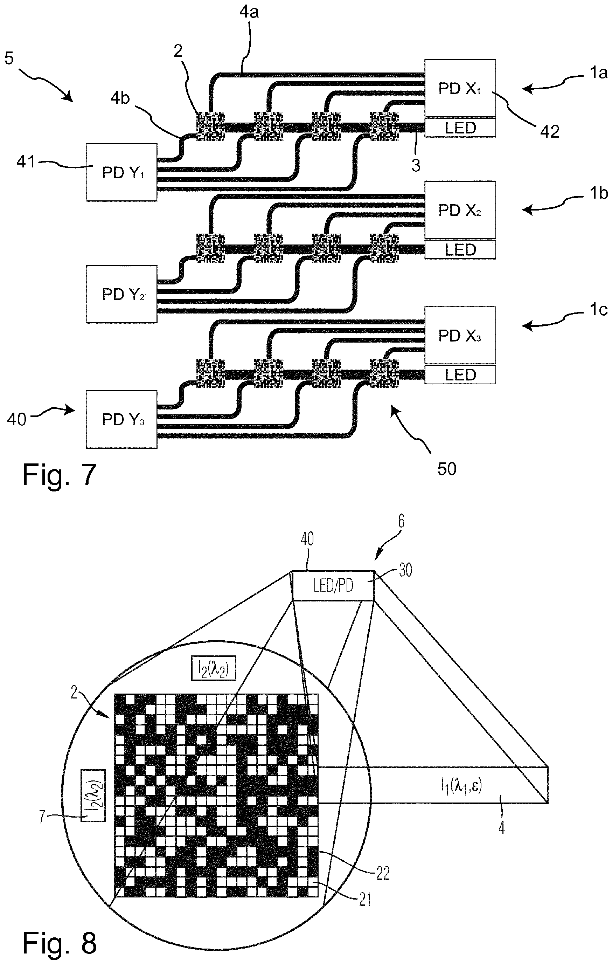

Figur 7 zeigt eine zweite Ausführungsform eines erfindungsgemäßen Sensors. Gleiche Bestandteile der Erfindung sind mit gleichen Bezugszeichen versehen, sodass sich die nachfolgende Beschreibung auf die wesentlichen Unterschiede zu der in Figur 6 gezeigten ersten Ausführungsform beschränkt.

Wie aus Figur 7 ersichtlich ist, befindet sich die Beleuchtungseinrichtung 30 auf bzw. neben dem Substrat, welches die Metamaterialien 2 aufnimmt. Die Zufuhr des zur Erfassung der Verformung notwendigen Lichtes erfolgt damit über Eingangswellenleiter 3, welche in der durch das Metamaterial 2 des Sensorelementes 50 definierten Ebene verlaufen. Ein Ende des Eingangswellenleiters 3 ist dabei mit der Beleuchtungseinrichtung 30 verbunden.

Figur 8 zeigt einen Dehnungssensor gemäß einer dritten Ausführungsform der Erfindung. Gleiche Bestandteile der Erfindung sind mit gleichen Bezugszeichen versehen, sodass sich die nachfolgende Beschreibung auf die wesentlichen Unterschiede beschränkt.

Auch die dritte Ausführungsform der Erfindung enthält ein nicht dargestelltes Substrat, welches ein Polymer enthält oder daraus besteht. Auf dem Polymer ist durch Strukturierung wie vorstehend beschrieben in zumindest einer Teilfläche bzw. einen Teilvolumen ein Metamaterial 2 mit ersten Pixeln 21 und zweiten Pixeln 22 realisiert. Weiterhin befindet sich auf dem Substrat zumindest ein Ausgangswellenleiter 4. Der Ausgangswellenleiter 4 enthält einen Fluoreszenzfarbstoff. Dieser Fluoreszenzfarbstoff leuchtet bei einer vorgebbaren, durch die Art des Farbstoffes definierten Fluoreszenzwellenlänge, sobald Licht größerer Wellenlänge im Ausgangswellenleiter 4 geführt wird. Die Intensität des Fluoreszenzsignals skaliert dabei mit der Intensität der im Ausgangswellenleiter 4 geführten optischen Leistung. Auch wenn nachfolgend ausschließlich von einem Fluoreszenzfarbstoff die Rede ist, so kann die Erfindung auch mit phosphoreszierenden Farbstoffen oder allgemein gesprochen mit jedem zur Lumineszenz fähigen Material ausgeführt werden. Der Begriff "Fluoreszenz" im Sinne der vorliegenden Beschreibung ist somit entsprechend breit auszulegen.

Wie bereits anhand der in Figur 6 näher erläuterten ersten Ausführungsform eines Sensors wird das zur Signalerzeugung benötigte Licht entlang des Normalenvektors des Substrates bzw. des darauf erzeugten optischen Metamaterials 2 eingestrahlt. Im Unterschied zur ersten Ausführungsform wird jedoch das Licht der Beleuchtungseinrichtung 30 im Freistrahl dem Metamaterial 2 zugeführt. Hierzu kann die Beleuchtungseinrichtung 30 einen Laser enthalten, insbesondere einen Halbleiterlaser. Alternativ oder zusätzlich kann die Beleuchtungseinrichtung 30 auch eine Linse bzw. ein Linsensystem aufweisen, welches das Licht einer Lichtquelle auf das Substrat bzw. das Metamaterial 2 fokussiert. In diesem Fall kann die Lichtquelle auch eine LED, eine Bogenlampe oder eine andere, an sich bekannte Lichtquelle enthalten.

In Abhängigkeit der Dehnung bzw. Stauchung des Metamaterials 2 wird wiederum ein größerer oder geringerer Anteil des eintreffenden Lichtes in den Ausgangswellenleiter 4 eingekoppelt. Dieses Licht führt zur Anregung des Fluoreszenzfarbstoffes, sodass der Ausgangswellenleiter 4 bzw. die mit dem Farbstoff versehene Teilfläche des Ausgangswellenleiters 4 mit der durch den Farbstoff vorgegebenen Fluoreszenzwellenlänge leuchtet. Die Intensität dieses Leuchtens stellt das Messsignal dar.

Das Messsignal kann somit in einfacher Weise berührungslos erfasst werden, beispielsweise durch ein Kamerasystem, welches mittels einer Linse oder eines Linsensystems das Messsignal auf eine Erfassungseinrichtung abbildet, welche beispielsweise eine Bildverstärkerröhre, einen CCD-Sensor, einen CMOS-Sensor, eine Fotodiode oder ein Fotodiodenarray enthalten kann. Die dritte Ausführungsform der Erfindung erlaubt somit eine vollständig berührungslose Erfassung des Messwertes, welcher eine Dehnung bzw. Stauchung des Metamaterials und damit eine Temperatur- und/oder eine mechanische Spannung repräsentieren kann.

Zur Normierung des Fluoreszenzsignals des Ausgangswellenleiters 4 können optional Teilflächen 7 vorhanden sein, welche ebenfalls mit einem Fluoreszenzfarbstoff versehen sind. In einigen Ausführungsformen der Erfindung kann der zweite Fluoreszenzfarbstoff der Teilflächen 7 vom ersten Fluoreszenzfarbstoff des Ausgangswellenleiters 4 verschieden sein. Somit leuchten der Ausgangswellenleiter 4 einerseits und die Teilflächen 7 andererseits bei Anregung durch die identische Lichtquelle mit unterschiedlichen Wellenlängen, sodass beide Fluoreszenzsignale einfach durch Wellenlängenmultiplexverfahren unterschieden werden können. Hierzu können die einzelnen Pixel bzw. Erfassungsbereiche der Nachweiseinrichtung in Subpixel unterteilt sein, welche entweder für Licht der einen oder der anderen Wellenlänge bevorzugt sensitiv sind. In anderen Ausführungsformen der Erfindung kann alternativ oder zusätzlich eine räumliche Trennung der Messsignale der Teilflächen 7 und der Ausgangswellenleiter 4 erfolgen.

Die zumindest eine Teilfläche 7 ist beabstandet zum Metamaterial 2 angeordnet, sodass optische Signale zwischen dem Metamaterial 2 und der Teilfläche 7 nicht oder nur in sehr geringem Maße überkoppeln können. Die Intensität des Fluoreszenzsignals der Teilfläche 7 stellt somit ein Maß für das auf das Metamaterial 2 auftreffende Licht dar, sodass das Messsignal im Ausgangswellenleiter 4 auf die eintreffende Lichtintensität normiert werden kann. Hierdurch kann die Genauigkeit der Messung erhöht sein oder bei stark schwankendem Abstand zwischen Beleuchtungseinrichtung 40 und Metamaterial 2 überhaupt erst ermöglicht werden.

Das Substrat mit dem Metamaterial 2, dem Ausgangswellenleiter 4 und den optionalen Teilflächen 7 kann in der dritten Ausführungsform der Erfindung somit als vollständig passives Bauelement ohne weitere elektrische bzw. elektronische Komponenten ausgeführt sein. Ein solcher Sensor lässt sich kostengünstig produzieren und kann besonders robust gegenüber Umwelteinflüssen sein. Beispielsweise lassen sich solche Sensoren einfach auf zu überwachende Bauteile aufkleben.

Die zur Erfassung der Messwerte erforderliche Beleuchtungseinrichtung 40 und die Nachweiseinrichtung 30 können in einem gemeinsamen Auslesegerät 6 zusammengefasst sein. Das Auslesegerät 6 koppelt ausschließlich optisch an den erfindungsgemäßen Sensor, sodass die Überwachung mechanischer Bauteile bzw. die Erfassung der Temperatur auch durch Fenster hindurch möglich ist, beispielsweise, wenn sich die zu überwachende Komponente im Vakuum oder in korrosiver Umgebung befindet. Hierzu kann das Auslesegerät 6 beispielsweise als Handgerät ausgeführt sein oder auf einem Stativ montiert werden. Auch die Auslese einer großen Anzahl von Sensoren ist somit möglich, beispielsweise wenn sich die zu überwachenden Komponenten auf einem Förderband am Auslesegerät 6 vorbeibewegen. Schließlich können auch großflächige Bauteile, beispielsweise Membrandächer, oder langgestreckte Bauteile, beispielsweise Rohrsysteme oder Pipelines, in einfacher Weise überwacht werden, wenn die Auslesegerät 6 auf einem unbemannten Flugobjekt montiert ist, beispielsweise einer Drohne, welche eine Mehrzahl von Sensoren sequenziell anfliegt und erfasst. In gleicher Weise kann das Auslesegerät 6 uf einem Fahrzeug montiert sein, welches entweder auf einer paralel zum Rohrsystem verlaufenden Schiene fährt oder das zu überwachende Rohr selbst als Schiene verwendet.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Optische Komponente (1) geeignet zur Verwendung als Koppler zwischen Ein- und Ausgangswellenleitern oder in einem Sensor für Temperatur oder in Sensor für mechanische Spannung, aufweisend ein Substrat (10) mit einem ersten Brechungsindex, in welchem Raumbereiche (12) mit einem zweiten Brechungsindex ausgebildet sind, wobei die optische Komponente (1) zumindest ein optisches Metamaterial (2) enthält, welches eine Mehrzahl einzelner Pixel (21, 22) enthält, welche jeweils einen Raumbereich umfassen, welcher den ersten oder den zweiten Brechungsindex aufweist, wobei das Substrat (10) zumindest ein erstes Polymer mit einem ersten Brechungsindex enthält oder daraus besteht und die Raumbereiche (12) mit dem zweiten Brechungsindex durch Dotieren oder Materialmodifikation durch Laserstrahlung und/oder UV-Strahlung oder teilweises Entfernen des ersten Polymers durch Maskieren und Ätzen und Auffüllen mit einem zweiten Polymer ausgebildet sind, wobei der erste Brechungsindex zwischen 1,0 und 1,6 beträgt und der zweite Brechungsindex zwischen 1,4 und 1,9 beträgt und der zweite Brechungsindex größer ist als der erste Brechungsindex.

2. Optische Komponente nach Anspruch 1, **dadurch gekennzeichnet, dass** die Länge und/oder die Breite und/oder die Höhe eines Pixels (21, 22) kleiner ist, als die Wellenlänge der optischen Signale, für deren Betrieb die optische Komponente eingerichtet ist.

3. Optische Komponente nach einem der Ansprüche 1 bis 2, **dadurch gekennzeichnet, dass** das die Pixel (21, 22) des Metamaterials (2) in einem Array angeordnet sind, wobei optional das Array in jeder Raumrichtung zwischen 10 und 1000 oder zwischen 10 und 200 oder zwischen 100 und 1000 oder zwischen 150 und 800 oder zwischen 50 und 500 Pixeln aufweist und
dass optional ein Teil der Pixel (21, 22) einen Dotierstoff und/oder Nanopartikel enthalten.

4. Optische Komponente nach einem der Ansprüche 1 bis 3, **dadurch gekennzeichnet, dass** die Breite und/oder die Länge eines Pixels zwischen 50 nm und 800 nm oder zwischen 200 nm und 400 nm beträgt und/oder dass die Höhe eines Pixels zwischen 0,5 µm und 5 µm beträgt.

5. Optische Komponente nach einem der Ansprüche 1 bis 4, **dadurch gekennzeichnet, dass** das Substrat (10) Polymethylmethacrylat und/oder einen Fotoresist enthält.

6. Optischer Sensor (5) mit zumindest einem Sensorelement (50) und zumindest einer Beleuchtungseinrichtung (30), mit welchem dem Sensorelement Licht zuführbar ist, und mit zumindest einer Nachweiseinrichtung (40), mit welcher das vom Sensorelement ausgehende Licht analysierbar ist, **dadurch gekennzeichnet, dass** das Sensorelement (50) eine optische Komponente (1) nach einem der Ansprüche 1 bis 5 enthält.

7. Sensor nach Anspruch 6, **dadurch gekennzeichnet, dass** zumindest eine Beleuchtungseinrichtung (30) mittels eines Eingangswellenleiters (3) an das Sensorelement (50) gekoppelt ist und/oder
dass zumindest eine Nachweiseinrichtung (40) mittels eines Ausgangswellenleiters (4) an das Sensorelement (50) gekoppelt ist.

8. Sensor nach einem der Ansprüche 6 oder 7, **dadurch gekennzeichnet, dass** die Nachweiseinrichtung (40) zumindest zwei Fotodioden (41, 42) enthält, welche mit je einem zugeordneten Ausgangswellenleiter (4a, 4b) an das Sensorelement (50) gekoppelt sind, oder
dass die Nachweiseinrichtung (40) zumindest zwei Fotodioden (41, 42) enthält, welche mit je einem zugeordneten Ausgangswellenleiter (4a, 4b) an das Sensorelement (50) gekoppelt sind, wobei einer der Ausgangswellenleiter (4a) ein Singlemode-Wellenleiter ist und der andere Ausgangswellenleiter (4b) ein Multimode-Wellenleiter ist.

9. Sensor nach einem der Ansprüche 6 bis 8, **dadurch gekennzeichnet, dass** zumindest ein Ausgangswellenleiter (4) einen ersten Fluoreszenzfarbstoff enthält und/oder dass auf dem Substrat (10) des Sensors zumindest eine Teilfläche angeordnet ist, welche einen zweiten Fluoreszenzfarbstoff enthält.

10. Verfahren zur Messung einer Dehnung und/oder einer Temperatur mit zumindest einer optischen Komponente (1) nach einem der Ansprüche 1 bis 5, wobei mit zumindest einer Beleuchtungseinrichtung (30) dem Metamaterial (2) Licht zugeführt wird, und mit zumindest einer Nachweiseinrichtung (40),das vom Metamaterial (2) ausgehende Licht analysiert wird.

11. Verfahren nach Anspruch 10, **dadurch gekennzeichnet, dass** die Beleuchtungseinrichtung (30) Licht mit einer Wellenlänge zwischen 500 nm und 1000 nm aussendet oder dass die Beleuchtungseinrichtung (30) Licht mit einer Wellenlänge zwischen 800 nm und 950 nm aussendet.

12. Verfahren nach einem der Ansprüche 10 oder 11, **dadurch gekennzeichnet, dass** das Licht der Beleuchtungseinrichtung (30) in einer durch das Metamaterial (2) des Sensorelementes (50) definierten Ebene mittels eines Eingangswellenleiters (3) geführt wird oder dass das Licht der Beleuchtungseinrichtung (30) dem Sensorelement (50) entlang des Normalenvektors der durch das Metamaterial (2) des Sensorelementes (50) definierten Ebene zugeführt wird.

13. Verfahren nach einem der Ansprüche 10 bis 12, **dadurch gekennzeichnet, dass** zumindest ein Ausgangswellenleiter (4) einen ersten Fluoreszenzfarbstoff enthält und mit zumindest einer Nachweiseinrichtung (40) die Intensität der Fluoreszenz bestimmt wird.

14. Verfahren nach einem der Ansprüche 10 bis 13, **dadurch gekennzeichnet, dass** im Erfassungsbereich der Nachweiseinrichtung (40) zumindest eine Teilfläche (7) angeordnet ist, welche einen zweiten Fluoreszenzfarbstoff enthält, wobei aus der Intensität der Fluoreszenz der Teilfläche (7) die Intensität des Lichtes der Beleuchtungseinrichtung (30) bestimmt wird.

15. Verfahren nach Anspruch 14, **dadurch gekennzeichnet, dass** die Trennung des Fluoreszenzsignals der Teilfläche (7) und des Ausgangswellenleiters (4) durch Wellenlängenmultiplex und/oder durch räumliche Trennung der Signale in der Nachweiseinrichtung (40) erfolgt.

## Claims

1. Optical component (1) suitable for use as a coupler between input and output waveguides or in a sensor for temperature or in a sensor for mechanical stress, comprising a substrate (10) having a first refractive index in which spatial regions (12) having a second refractive index are formed, wherein the optical component (1) contains at least one optical metamaterial (2) which contains a plurality of individual pixels (21, 22) each comprising a spatial region having the first or the second refractive index, wherein the substrate (10) contains or consists of at least a first polymer having a first refractive index and the spatial regions (12) with the second refractive index are formed by doping or material modification by laser radiation and/or UV radiation or partial removal of the first polymer by masking and etching and filling with a second polymer, wherein the first refractive index is between 1.0 and 1.6 and the second refractive index is between 1.4 and 1.9 and the second refractive index is greater than the first refractive index.

2. Optical component according to claim 1, **characterized in that** the length and/or the width and/or the height of a pixel (21, 22) is smaller than the wavelength of the optical signals, for the operation of which the optical component is designed.

3. Optical component according to any one of claims 1 to 2,
**characterized in that** the pixels (21, 22) of the metamaterial (2) are arranged in an array, optionally the array having between 10 and 1000 or between 10 and 200 or between 100 and 1000 or between 150 and 800 or between 50 and 500 pixels in each spatial direction, and
**in that** optionally some of the pixels (21, 22) contain a dopant and/or nanoparticles.

4. Optical component according to any one of claims 1 to 3,
**characterized in that** the width and/or the length of a pixel is between 50 nm and 800 nm or between 200 nm and 400 nm and/or in that the height of a pixel is between 0.5 µm and 5 µm.

5. Optical component (5) according to any one of claims 1 to 4,
**characterized in that** the substrate (10) contains polymethyl methacrylate and/or a photoresist.

6. Optical sensor (5) having at least one sensor element (50) and at least one illumination device (30), by means of which light can be supplied to the sensor element, and having at least one detection device (40), by means of which the light emitted by the sensor element can be analyzed, **characterized in that** the sensor element (50) contains an optical component (1) according to any one of claims 1 to 5.

7. Sensor according to claim 6, **characterized in that** at least one illumination device (30) is coupled to the sensor element (50) by means of an input waveguide (3) and/or
**in that** at least one detection device (40) is coupled to the sensor element (50) by means of an output waveguide (4).

8. Sensor according to any one of claims 6 or 7, **characterized in that** the detection device (40) contains at least two photodiodes (41, 42) which are each coupled to the sensor element (50) by means of an associated output waveguide (4a, 4b), or
**in that** the detection device (40) contains at least two photodiodes (41, 42), each of which is coupled to the sensor element (50) by an associated output waveguide (4a, 4b), one of the output waveguides (4a) being a single-mode waveguide and the other output waveguide (4b) being a multimode waveguide.

9. Sensor according to any one of claims 6 to 8, **characterized in that** at least one output waveguide (4) contains a first fluorescent dye and/or
**in that** at least one partial area which contains a second fluorescent dye is arranged on the substrate (10) of the sensor.

10. Method for measuring a strain and/or a temperature with at least one optical component (1) according to any one of claims 1 to 5, wherein light is supplied to the metamaterial (2) by means of at least one illumination device (30), and the light emitted by the metamaterial (2) is analyzed by means of at least one detection device (40).

11. Method according to claim 10, **characterized in that** the illumination device (30) emits light with a wavelength between 500 nm and 1000 nm or
**in that** the illumination device (30) emits light with a wavelength between 800 nm and 950 nm.

12. Method according to any one of claims 10 or 11, **characterized in that** the light of the illumination device (30) is guided in a plane defined by the metamaterial (2) of the sensor element (50) by means of an input waveguide (3) or
**in that** the light of the illumination device (30) is supplied to the sensor element (50) along the normal vector of the plane defined by the metamaterial (2) of the sensor element (50).

13. Method according to any one of claims 10 to 12, **characterized in that** at least one output waveguide (4) contains a first fluorescent dye and the intensity of the fluorescence is determined by means of at least one detection device (40).

14. Method according to any one of claims 10 to 13, **characterized in that** at least one partial area (7) containing a second fluorescent dye is arranged in the detection area of the detection device (40), the intensity of the light of the illumination device (30) being determined from the intensity of the fluorescence of the partial area (7).

15. Method according to claim 14, **characterized in that** the separation of the fluorescence signal of the partial area (7) and of the output waveguide (4) is carried out by wavelength division multiplexing and/or by spatial separation of the signals in the detection device (40).

## Revendications

1. Composant optique (1) approprié pour être utilisé comme coupleur entre des guides d'ondes d'entrée et de sortie ou dans un capteur de température ou dans un capteur de contrainte mécanique, comprenant un substrat (10) qui présente un premier indice de réfraction et dans lequel sont formées des zones spatiales (12) présentant un deuxième indice de réfraction,
dans lequel
le composant optique (1) comprend au moins un métamatériau optique (2) qui comprend une pluralité de pixels individuels (21, 22) présentant chacun une zone spatiale qui présente le premier ou le deuxième indice de réfraction,
le substrat (10) comprend ou est constitué d'au moins un premier polymère présentant un premier indice de réfraction, et les zones spatiales (12) présentant le deuxième indice de réfraction sont formées par dopage ou par modification du matériau par rayonnement laser et/ou par rayonnement UV ou par élimination partielle du premier polymère par masquage et gravure et remplissage avec un deuxième polymère,
le premier indice de réfraction est compris entre 1,0 et 1,6, et le deuxième indice de réfraction est compris entre 1,4 et 1,9, et le deuxième indice de réfraction est supérieur au premier indice de réfraction.

2. Composant optique selon la revendication 1,
**caractérisé en ce que** la longueur et/ou la largeur et/ou la hauteur d'un pixel (21, 22) est inférieure à la longueur d'onde des signaux optiques pour le fonctionnement desquels le composant optique est conçu.

3. Composant optique selon l'une des revendications 1 à 2,
**caractérisé en ce que** les pixels (21, 22) du métamatériau (2) sont disposés en un réseau,
optionnellement, le réseau comprend, dans chaque direction spatiale, entre 10 et 1000 pixels ou entre 10 et 200 pixels, ou entre 100 et 1000 pixels, ou entre 150 et 800 pixels, ou entre 50 et 500 pixels, et
**en ce que**, optionnellement, une partie des pixels (21, 22) comprennent une substance dopante et/ou des nanoparticules.

4. Composant optique selon l'une des revendications 1 à 3,
**caractérisé en ce que** la largeur et/ou la longueur d'un pixel est comprise entre 50 nm et 800 nm ou entre 200 nm et 400 nm, et/ou
**en ce que** la hauteur d'un pixel est comprise entre 0,5 µm et 5 µm.

5. Composant optique selon l'une des revendications 1 à 4,
**caractérisé en ce que** le substrat (10) comprend du polyméthacrylate de méthyle et/ou une résine photosensible.

6. Capteur optique (5) comprenant au moins un élément capteur (50) et au moins un dispositif d'éclairage (30) permettant d'amener de la lumière à l'élément capteur, et comprenant au moins un dispositif de détection (40) permettant d'analyser la lumière émanant de l'élément capteur,
**caractérisé en ce que** l'élément capteur (50) comprend un composant optique (1) selon l'une des revendications 1 à 5.

7. Capteur selon la revendication 6,
**caractérisé en ce qu'**au moins un dispositif d'éclairage (30) est couplé à l'élément capteur (50) au moyen d'un guide d'ondes d'entrée (3), et/ou
**en ce qu'**au moins un dispositif de détection (40) est couplé à l'élément capteur (50) au moyen d'un guide d'ondes de sortie (4).

8. Capteur selon l'une des revendications 6 ou 7,
**caractérisé en ce que** le dispositif de détection (40) comprend au moins deux photodiodes (41, 42) couplées chacune à l'élément capteur (50) par un guide d'ondes de sortie associé (4a, 4b), ou
**en ce que** le dispositif de détection (40) comprend au moins deux photodiodes (41, 42) couplées chacune à l'élément capteur (50) par un guide d'ondes de sortie associé (4a, 4b), l'un des guides d'ondes de sortie (4a) étant un guide d'ondes monomode et l'autre guide d'ondes de sortie (4b) étant un guide d'ondes multimode.

9. Capteur selon l'une des revendications 6 à 8,
**caractérisé en ce qu'**au moins un guide d'ondes de sortie (4) comprend un premier colorant fluorescent, et/ou
**en ce que** sur le substrat (10) du capteur est disposée au moins une surface partielle qui comprend un deuxième colorant fluorescent.

10. Procédé de mesure d'un allongement et/ou d'une température au moyen d'au moins un composant optique (1) selon l'une des revendications 1 à 5,
dans lequel de la lumière est amenée au métamatériau (2) par l'intermédiaire d'au moins un dispositif d'éclairage (30), et la lumière émanant du métamatériau (2) est analysée par l'intermédiaire d'au moins un dispositif de détection (40).

11. Procédé selon la revendication 10,
**caractérisé en ce que** le dispositif d'éclairage (30) émet une lumière ayant une longueur d'onde comprise entre 500 nm et 1000 nm, ou
**en ce que** le dispositif d'éclairage (30) émet une lumière ayant une longueur d'onde comprise entre 800 nm et 950 nm.

12. Procédé selon l'une des revendications 10 ou 11,
**caractérisé en ce que** la lumière du dispositif d'éclairage (30) est guidée dans un plan, défini par le métamatériau (2) de l'élément capteur (50), au moyen d'un guide d'ondes d'entrée (3), ou
**en ce que** la lumière du dispositif d'éclairage (30) est amenée à l'élément capteur (50) le long du vecteur normal du plan défini par le métamatériau (2) de l'élément capteur (50).

13. Procédé selon l'une des revendications 10 à 12,
**caractérisé en ce qu'**au moins un guide d'ondes de sortie (4) comprend un premier colorant fluorescent, et
**en ce que** l'intensité de la fluorescence est déterminée par l'intermédiaire d'au moins un dispositif de détection (40).

14. Procédé selon l'une des revendications 10 à 13,
**caractérisé en ce que** dans la zone de détection du dispositif de détection (40) est disposée au moins une surface partielle (7) qui comprend un deuxième colorant fluorescent, l'intensité de la lumière du dispositif d'éclairage (30) étant déterminée à partir de l'intensité de la fluorescence de la surface partielle (7).

15. Procédé selon la revendication 14,
**caractérisé en ce que** la séparation du signal de fluorescence de la surface partielle (7) et du guide d'ondes de sortie (4) est effectuée par multiplexage en longueur d'onde et/ou par séparation spatiale des signaux dans le dispositif de détection (40).
